# EUROPEAN PATENT APPLICATION

(11) **EP 2 068 114 A1**
(43) Date of publication of application: **10.06.2009**
(21) Application number: 07122263.2
(22) Date of filing: 04.12.2007
(51) Int. Cl.: G01B 21/04

(54) **Object measuring machine with optimised calibration system**

(71) Applicant: Metris IPR N.V., 3001 Leuven (BE)
(72) Inventor: Tomelleri, Raffaele, 37066 Sommacampagna (VR) (IT)
(74) Representative: Brants, Johan P.E.

(57) **Abstract**

The present invention relates to a measurement procedure for an object measuring machine, wherein the machine calibration measurements and the measurements on the part are both carried out within a smaller measurement field than the one of the machine. It further relates to an articulated arm measuring machine adapted to perform the procedure. It further relates to a computer program adapted to perform the procedure.

## Description

The present invention concerns a procedure to increase the accuracy of an object measuring machine such as an articulated arm measuring machine, a co-ordinate measuring machine (CMM), a laser scanner, a laser radar, or laser tracker, when it is used for specific measurements within limited measurement fields or that foresee a restriction in the angular rotation of the axes of the machine.

Object measurement machines in general, and articulated arm measuring machines in particular, are susceptible of employing specific procedures to calibrate them, i.e. to compensate for systematic errors and increase measuring accuracy, and this is done according to known techniques.

Such calibration procedures include a set of measurements to carry out within the working range of the machine and that can be restricted, as far as articulated arm measuring machines are concerned, to length and repeatability measurements on a sphere or on a cone.

The completion of the calibration of the machine defines a set of parameters characteristic of the machine, that define the descriptive mathematical model, that give the cartesian co-ordinates of the touch probe as function of the angular co-ordinates of the machine, of the employed touch probe, or Laser Head, and of piece and machine temperature.

Sometimes object measuring machines are employed to measure pieces for which a smaller working range is required than the one the machine can measure, and for which shorter machine axes strokes are required than the ones the machine can perform.

For such smaller size pieces, higher measurement accuracy is often required than reachable with the standard object measuring machine.

### SUMMARY OF THE INVENTION

Main purpose of the present finding is that of solving the above mentioned problem and increasing the accuracy of the object measuring machine, in particular the articulated arm measuring machine when this is employed within a restricted measurement field.

Further purpose of the present finding is that of increasing the accuracy of the object measuring machine, in particular, the articulated arm measuring machine when this is employed with axes angular stokes shorter than the maximum available.

These purposes, and more as will turn out from the description that follows, are reached, according to the invention, by means of a procedure characterised by that:
1. The calibration procedure of the measuring machine includes measurements that are carried out in restricted measurement fields and also measurements carried out with limited stroke of the angles of the machine.
2. For each restricted measurement field together with each limited axes angular strokes condition, a set of parameters is defined, also named parameter file, that defines a specific mathematical model descriptive of the machine with the above limitations in field and strokes.
3. When the machine is employed within a restricted measurement field and with a given limited strokes of the angles of the machine, the related parameter file is activated and a mathematical model together with it, that gives the position of the touch sensor, or Laser Head, in those limited conditions.
4. The activation of a specific parameter file and consequently of a specific mathematical model is either done by manual selection or automatic, carrying out a set of movements with the machine that describe its restrictions in both measurement field and axis strokes, before the piece measurement takes place.
5. For each parameter file, related to a specific restricted working field and to the maximum allowed axis strokes, specific software limit switches are associated to the respective axes movements and to the x, y and z co-ordinates of the machine, that enable measurement only when the axes are within their software limit switches and the coordinates are within the determined x, y, z software limit switches.

One embodiment of the invention is a calibration and measurement procedure for an object measuring machine, wherein the machine calibration measurements and the measurements on the part are both carried out within a smaller measurement field than the one of the machine.

Another embodiment of the invention is a calibration and measurement procedure as defined above, wherein the machine calibration measurements and the measurements on the part are both carried out by limitations on the stroke of at least one axis lower than the ones available from the machine.

Another embodiment of the invention is a calibration and measurement procedure as defined above, wherein the parameter file includes the software limit switches of the axis strokes and the software limit switches of the co-ordinates x, y and z that allow the measurement only within the maximum values.

Another embodiment of the invention is a calibration and measurement procedure as defined above, wherein the parameter file is manually selected from a table that shows the available parameter files with the relevant software limit switches of the working range and the software limit switches of the strokes of the axes of the machine.

Another embodiment of the invention is a calibration and measurement procedure as defined above, wherein the parameter file is automatically selected by performing movements that simulate the measurement of the part.

Another embodiment of the invention is a calibration and measurement procedure as defined above, wherein the calibration measurements are specifically carried out for a specific measurement field and with specific limitations to the strokes of the axes.

Another embodiment of the invention is a calibration and measurement procedure as defined above, wherein the calibration measurements, within a working field with specific limitations to the strokes of the axes, are taken out from the overall length and repeatability measurement performed without limitations, set by restricting the working range and the strokes of the axes.

Another embodiment of the invention is a calibration and measurement procedure as defined above, wherein the calibration measurements, within a working field with specific limitations to the strokes of the axes, are taken out from the overall length and repeatability measurement set after simulating measurement movements on the part.

Another embodiment of the invention is an object measuring machine, in particular an articulated arm measuring machine, adapted to perform the calibration and measurement procedure as defined above.

Another embodiment of the invention is a computer program stored on a computer readable medium, adapted to carry out the calibration and measurement procedure as defined above.

### DESCRIPTION OF THE FIGURES

The present invention is here below further described in some preferred embodiments that are to be considered in all respects as illustrative and not restrictive, with reference made to the attached tables and drawings, where:
**FIG. 1****:** shows a schematics of the measuring machine that performs length and repeatability measurements on a sphere,
**FIG. 2****:** schematically shows the measuring machine while calibrating in a restricted measurement field,
**FIG. 3****:** schematically shows the measuring machine while calibrating for limited axis angular strokes,

### DETAILED DESCRIPTION OF THE INVENTION

Unless defined otherwise, all technical and scientific terms used herein have the same meaning as is commonly understood by one of skill in the art. All publications referenced herein are incorporated by reference thereto. All United States patents and patent applications referenced herein are incorporated by reference herein in their entirety including the drawings.

The articles "a" and "an" are used herein to refer to one or to more than one, i.e. to at least one of the grammatical object of the article. The recitation of numerical ranges by endpoints includes all integer numbers and, where appropriate, fractions subsumed within that range (e.g. 1 to 5 can include 1, 2, 3, 4 when referring to, for example, a number of articles, and can also include 1.5, 2, 2.75 and 3.80, when referring to, for example, measurements). The recitation of end points also includes the end point values themselves (e.g. from 1.0 to 5.0 includes both 1.0 and 5.0).

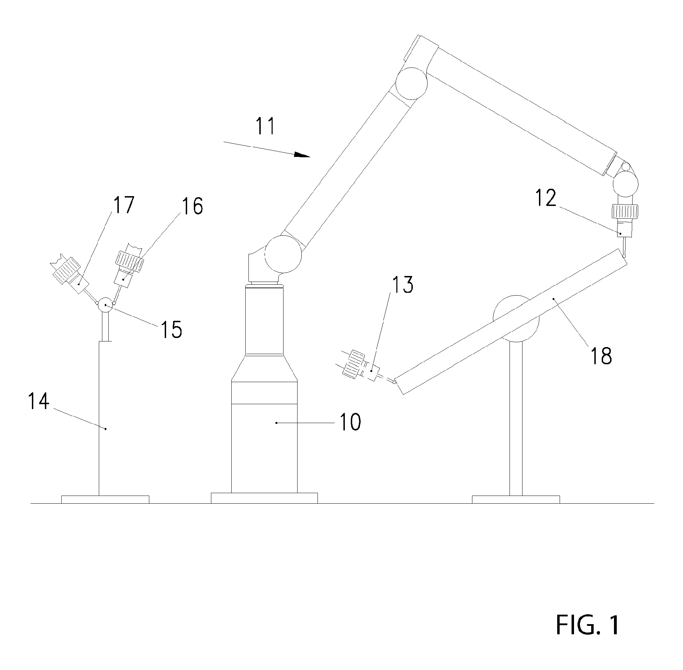

**FIG. 1** shows an object measuring machine that is an articulated arm measuring machine 11 that carries out the length measurement of calibration gauge **18** with the touch probe in positions **12** and **13.** Such length measurements are carried out at different positions and orientations of the gauge with respect to the measuring machine and each measurement is carried out with different combinations of the angles of the machine.

The same figure shows repeatability measurements on a sphere **15** carried out with the two different positions and orientations of the touch probe. Such repeatability measurements on the sphere are carried out at more positions of the sphere within the working range, while for each position of the sphere several measurements are carried out with the touch probe at different positions and orientations.

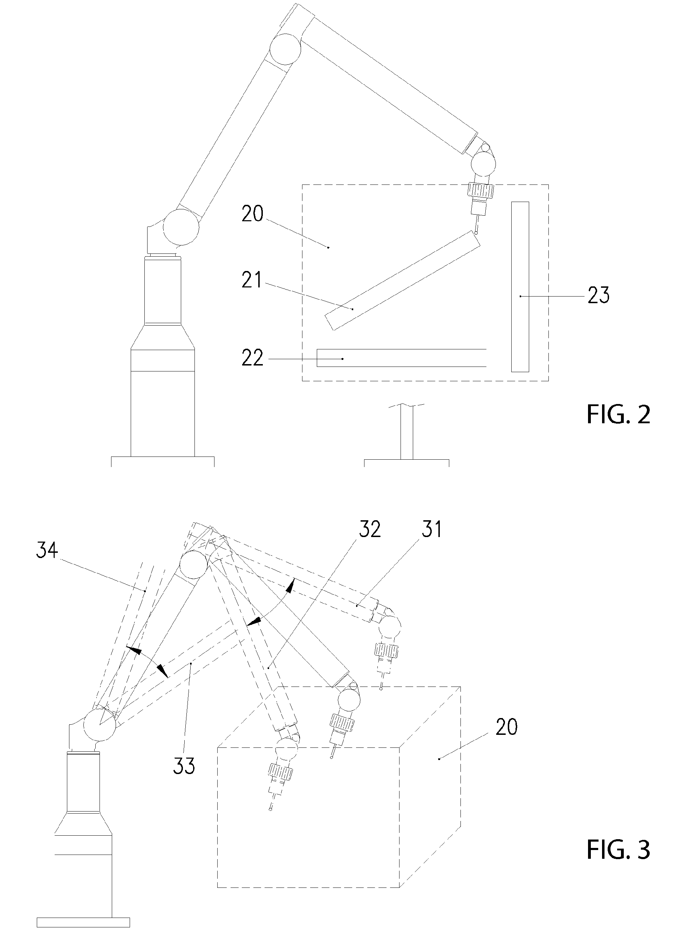

**FIG. 2** shows some length measurements carried out within a restricted measurement field **20** where the gauge has the positions and the orientations numbered **21, 22** and **23.** Within the restricted measurement field **20** many length measurements are carried out, plus the necessary repeatability measurements on sphere, also performed within the restricted measurement field.

**FIG. 3** shows some positions that the machine can take when used in the restricted measurement field **20,** for which also the angular strokes of some axes of the machine are also limited, as are for example the angular movements of the first arm, that can reach the maximum positions **33** and **34,** and the angular position of the second arm, that can reach at the angular positions **31** and **32.**

The limitation of the angular stroke may also concern the final axes that support the touch probe, and therefore the orientation of the touch probe is limited in that case.

The set of measurements, carried out within the restricted measurement field and with the limited axis strokes, is fed to a suitable parameter processing program, according to known techniques, in order to get the specific mathematical model describing the position of the touch probe within the restricted measurement field and within the given axis strokes.

For each restricted working field together with the limited axis strokes is associated to the parameter file that defines the relevant specific mathematical model of the measuring machine. Such parameter file also includes the maximum axis angular stroke allowed and the maximum x, y and z co-ordinates that the machine can measure.

Before measuring a piece, in relation to the specific piece to be measured, the operator chooses the appropriate parameter file, associated to the relevant software limit switches of both axes and machine measuring field, that allow to measure the piece.

The selection can be manual, with parameter file selection for example from a table showing the axis stroke limits and the co-ordinates xmin - xmax, ymin - ymax , zmin - zmax, and further showing the limitations required to the axes by giving angles αi,min and αi,max for each axis of the machine.

Otherwise, the selection of the appropriate parameter file for the measurement of the piece can be automatic, by performing some movements of the machine around the part to be measured, which is in practice a measuring simulation with the necessary margin, and this activates the appropriate parameter file selection, that best includes the necessary measurement field and the angular limitations to the axes.

As further improvement of the procedure, it is possible to avoid specific calibration measurements for any restricted measurement field, coupled with specific limitations to the strokes of the axes. In fact it is possible to gather all length and repeatability measurements on sphere taken in the whole machine measurement field, then to select a specific measurement field and angular limitations. Afterwards, the calibration data processing program reads, out of the measurement set, just the measurements that are strictly necessary to that restricted field and to the limited axis strokes, linking the measures to the software end stroke and limit co-ordinates x, y and z. This can be done for different measurement fields combined with different axis limitations, deriving length and repeatability measurements from the same measurement set obtained in the widest conditions.

The present invention has been illustrated and described in some preferred embodiments, but it is intended that variations in the execution are still possible, within the scope and the protection of the present patent for industrial invention.

The invention can also be used with other metrology system such a co-ordinate measuring machine (CMM), laser scanners, laser radars, laser trackers.

## Claims

1. Calibration and measurement procedure for an object measuring machine, wherein the machine calibration measurements and the measurements on the part are both carried out within a smaller measurement field than the one of the machine.

2. Calibration and measurement procedure for an object measuring machine according to the previous claim, wherein the machine calibration measurements and the measurements on the part are both carried out by limitations on the stroke of at least one axis lower than the ones available from the machine.

3. Calibration and measurement procedure for an object measuring machine according to the previous claims, wherein the parameter file includes the software limit switches of the axis strokes and the software limit switches of the co-ordinates x, y and z that allow the measurement only within the maximum values.

4. Calibration and measurement procedure for an object measuring machine according to the previous claims 1 through 3wherein the parameter file is manually selected from a table that shows the available parameter files with the relevant software limit switches of the working range and the software limit switches of the strokes of the axes of the machine.

5. Calibration and measurement procedure for an object measuring machine according to the previous claims from 1 through 3, wherein the parameter file is automatically selected by performing movements that simulate the measurement of the part.

6. Calibration and measurement procedure for an object measuring machine according to the previous claims, wherein the calibration measurements are specifically carried out for a specific measurement field and with specific limitations to the strokes of the axes.

7. Calibration and measurement procedure for an object measuring machine according to the previous claims 1 through 5, wherein the calibration measurements, within a working field with specific limitations to the strokes of the axes, are taken out from the overall length and repeatability measurement performed without limitations, set by restricting the working range and the strokes of the axes.

8. Calibration and measurement procedure for an object measuring machine according to the previous claims 1 through 5, wherein the calibration measurements, within a working field with specific limitations to the strokes of the axes, are taken out from the overall length and repeatability measurement set after simulating measurement movements on the part.

9. An object measuring machine, in particular an articulated arm measuring machine, adapted to perform the calibration and measurement procedure as defined in any of claims 1 to 8.

10. A computer program stored on a computer readable medium, adapted to carry out the calibration and measurement procedure as defined in any of claims 1 to 8.
